# EUROPÄISCHE PATENTSCHRIFT

(11) **EP 1 366 793 B1**
(45) Veröffentlichungstag und Bekanntmachung des Hinweises auf die Patenterteilung: **23.08.2006**
(21) Anmeldenummer: 03012012.5
(22) Anmeldetag: 28.05.2003
(51) Int. Cl.: B01D 53/00, B01D 5/00, B01D 8/00

(54) **Verfahren und Vorrichtung zur Gasreinigung**
Process and apparatus for gas purification
Procédé et dispositif pour purifier des gaz

(30) Priorität: 28.05.2002 DE 10223845
(43) Veröffentlichungstag der Anmeldung: 03.12.2003
(73) Patentinhaber: Air Liquide Deutschland GmbH, 40235 Düsseldorf (DE); Messer Group GmbH, 65843 Sulzbach (DE)
(72) Erfinder: Herzog, Friedhelm, Dr., 47799 Krefeld (DE); Kutz, Thomas, 41379 Bruggen Born (DE); Stahl, Manfred, 47804 Krefeld (DE); Terkatz, Stefan, 47807 Krefeld (DE)
(74) Vertreter: Kahlhöfer, Hermann

(56) Entgegenhaltungen:
- EP-A- 0 733 390
- DE-A- 3 701 544
- DE-C- 19 517 273
- DE-C- 19 645 487
- US-A- 5 799 509

## Beschreibung

Die Erfindung betrifft ein Verfahren und Vorrichtung zur Reinigung von. Gasen mit Wärmetauschern mit den Merkmalen des Oberbegriffs des Anspruchs 1 und eine für die Durchführung des Verfahrens geeignete Vorrichtung nach den Merkmalen des Oberbegriffs des Anspruchs 8.

Bei einer derartigen, beispielsweise aus DE 196 45 487 C1 bekannten Gasreinigung wird ein mit Schadstoffen beladenes Rohgas in mindestens einem ersten Wärmetauscher durch Kondensieren und/oder Ausfrieren der Schadstoffe mit Hilfe eines ersten Kühlmediums, beispielsweise mit gasförmigem Stickstoff, gereinigt.

Das Kältepotential des in dem ersten Wärmetauscher von Schadstoffen weitgehend gereinigten Reingases wird zur Verringerung der zur Reinigung des Rohgases in dem ersten Wärmetauscher erforderlichen Kälteleistung genutzt, wodurch eine kostengünstige Gasreinigung möglich ist.

Dazu wird das mit Hilfe des Reingases abgekühlte erste Kühlmedium mindestens einem weiteren, mit einem zweiten Kühlemedium, beispielsweise mit flüssigem Stickstoff, beaufschlagten Wärmetauscher zugeführt und danach in den ersten Wärmetauscher wieder eingespeist.

Diese herkömmliche Gasreinigung ist jedoch problematisch bei der Reinigung von mit besonders leichtsiedenden Schadstoffen, wie z.B. mit leichtsiedenden Lösemitteln, beladenen Rohgasen.

Der Erfindung liegt deshalb die Aufgabe zugrunde, die eingangs genannte Gasreinigung derart zu verbessern, dass auch mit besonders leichtsiedenden Schadstoffen beladene Gase kostengünstig gereinigt werden können.

Diese Aufgabe wird erfindungsgemäß mit einem Verfahren mit den Merkmalen von Anspruchl und mit einer Vorrichtung mit den Merkmalen von Anspruch 8 gelöst.

Das mindestens einem ersten Wärmetauscher mit einer Temperatur von plus 100°C bis minus 50°C zugeführte und in diesem mit Hilfe eines ersten Kühlmediums von seinem dampfförmigen Inhaltsstoffen teilweise befreite Gas wird in mindestens einem weiteren Wärmetauscher mit Hilfe eines zweiten Kühlmediums bis auf eine Temperatur von bis zu minus 196°C gekühlt.

Das durch die Tieftemperatur-Kühlung auch von seinen besonders leichtsiedenden Inhaltsstoffen, wie beispielsweise Lösemittel, gereinigte, tiefkühle Reingas wird mindestens einem weiteren Wärmetauscher zugeführt und in dem Wärmetauscher mit dem aus dem ersten Wärmetauscher mittels eines Gebläses oder einer Pumpe zugeführten Kühlmedium in Wärmeaustausch gebracht und anschließend - getrennt oder zusammen mit überschüssigem gasförmigen Stickstoff (GAN) - aus dem Wärmetauscher abgeführt.

Das durch das tiefkalte Reingas gekühlte erste Kühlmedium wird mit dem zur Tieftemperatur-Kühlung des Reingases eingesetzten zweiten Kühlmedium mindestens einem weiteren Wärmetauscher zugeführt.

Nach dem zwischen den beiden Kühlmedien in dem Wärmetauscher erfolgtem Wärmeaustausch wird das erste Kühlmedium wieder in den ersten Wärmetauscher eingespeist.

Nach der Erfindung ist es weiterhin vorgesehen, für die erfindungsgemäße Tieftemperatur-Kühlung des Reingases mindestens einen Tieftemperatur-Adsorber einzusetzen.

Der anstelle des Tieftemperatur-Wärmetauschers oder zusammen mit dem Tieftemperatur-Wärmetauscher einsetzbare Tieftemperatur-Adsorber weist geringe Abmessungen auf, ist zudem relativ kostengünstig und zudem sicher und zuverlässig im Einsatz.

Als Kühlmedium ist flüssiger Stickstoff auf Grund seines hohen Kälteinhalts sowie der relativ hohen Betriebssicherheit und wirtschaftlichen Verfahrensweise bei Stickstoff-gekühlten Wärmetauschern besonders vorteilhaft einsetzbar, insbesondere bei einer kombinierten Verwendung von flüssigem und gasförmigem Stickstoff als Kältemedium aus nur einer einzigen Quelle, beispielsweise einem Vorratsbehälter.

Zudem ist es nach der Erfindung vorgesehen, dass zwei oder mehrere der erforderlichen Wärmetauscher in einem einzelnen Apparat integriert sind und der Wärmetausch durch verschiedene Strömungswege an den gemeinsamen Wärmeaustauschflächen realisiert wird.

Durch die erfindungsgemäße Kühlung des aus dem ersten Wärmetauscher abgeführten Reingases bis auf eine sehr tiefe Temperatur werden die nach dem ersten Reinigungsschritt noch in dem Reingas vorhandenen, besonders leichtsiedenden Stoffe, wie beispielsweise Lösemittel, aus dem Gas fast vollständig entfemt.

Ein erfindungsgemäß erzeugtes Reingas entspricht in vollem Umfang den gesetzlichen Reinheitsbestimmungen.

Die vorteilhaft bei der aus DE 196 45 487 C1 bekannten Gasreinigung einsetzbare Erfindung ist für eine kostengünstige Reinigung von mit besonders leichtsiedenden Schadstoffen beladenen Gasen besonders geeignet.

Die Erfindung dient nicht nur zur Reinigung von Gasströmen, sondern auch zur Rückgewinnung von nützlichen Stoffen aus Prozeßgasströmen.

Nachfolgend wird die Erfindung anhand eines in der Zeichnung dargestellten Ausführungsbeispiels näher erläutert.

Es zeigen:
**Fig.** 1 eine schematische Darstellung einer erfindungsgemäßen Gasreinigung mit Wärmetauscher-Anordnung;
**Fig.** 2 eine schematische Darstellung der erfindungsgemäßen Gasreinigung mit Adsorber-Wärmetauscher-Anordnung.

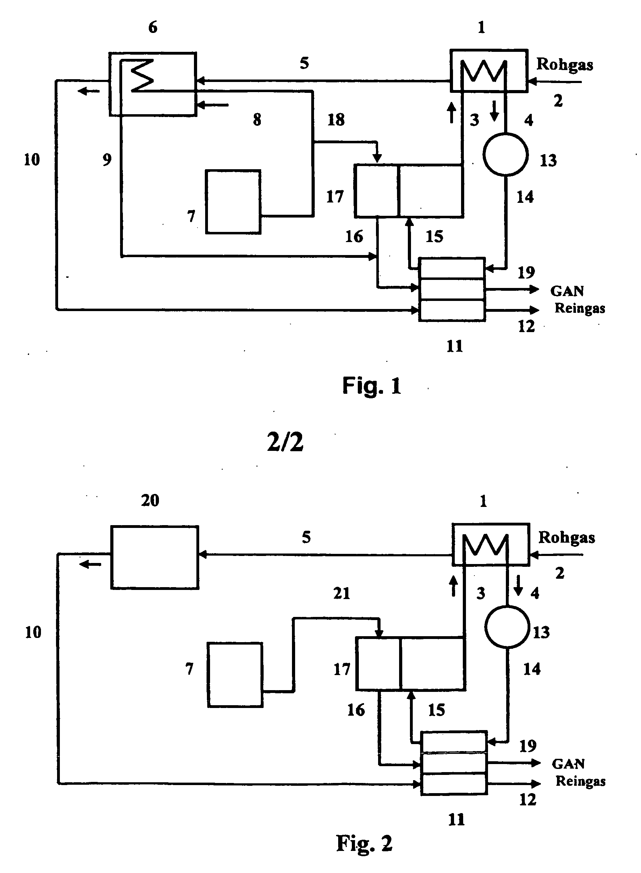

Gemäß **Fig. 1** wird einem ersten Wärmetauscher 1 ein mit besonders leichtsiedenden Stoffen, wie beispielsweise Lösemitteln, beladenes Rohgas (Prozeßgas) mit einer Temperatur von beispielsweise plus 10°C über eine Leitung 2 zugeführt. Das dem Wärmetauscher 1 zugeführte Rohgas wird mit Hilfe eines dem Wärmetauscher 1 über eine Leitung 3 zugeführten und über eine Leitung 4 aus dem Wärmetauscher 1 abgeführten ersten Kühlmediums, beispielsweise eines gasförmigen Stickstoffs, auf eine Temperatur von beispielsweise minus 130°C gekühlt, wobei der größte Teil der dampfförmigen Stoffe durch Kondensieren und/oder Ausfrieren aus dem Rohgas entfernt werden. Das auf diese Weise vorgereinigte Gas wird aus dem ersten Wärmetauscher 1 über eine Leitung 5 einem weiteren Wärmetauscher 6 zugeführt.
In dem Wärmetauscher 6 wird das vorgereinigte Gas mit Hilfe eines aus einem Vorratsbehälter 7 über eine Leitung 8 dem Wärmetauscher 6 zugeführten und über eine Leitung 9 einem als Rekuperator ausgebildeten Wärmetauscher 11 wieder zugeführten zweiten Kühlmediums, beispielsweise mittels flüssigen Stickstoffs, auf eine Temperatur von beispielsweise minus 160°C gekühlt, wodurch auch die besonders leichtsiedenden Stoffe, wie z.B. Lösemittel, aus dem vorgereinigten Gas durch Kondensieren und/oder Ausfrieren entfernt werden.
Das kalte Reingas wird mit einer Temperatur von beispielsweise minus 160°C aus dem Wärmetauscher 6 über eine Leitung 10 einem nachgeschalteten Wärmetauscher 11 zugeführt und nach mit dem ersten Kühlmedium stattgefundenen Wärmeaustausch aus dem Wärmetauscher 11 über eine Leitung 12 - wie auch überschüssiger gasförmiger Stickstoff (GAN) über eine Leitung 19 - aus dem Wärmetauscher 11 abgezogen.
Zum Wärmeaustausch mit dem Reingas im Wärmetauscher 11 wird das erste Kühlmedium aus dem ersten Wärmetauscher 1 mittels eines/einer in der Leitung 4 installierten Gebläses bzw. Pumpe 13 über eine Leitung 14 in den Wärmetauscher 11 eingebracht.
Nach dem mit dem Reingas in dem Wärmetauscher 11 erfolgten Wärmeaustausch wird das erste Kühlmedium über eine Leitung 15 einem weiteren Wärmetauscher 17 zugeführt und mit dem aus dem Vorratsbehälter 7 über die Leitung 8 und eine Leitung 18 dem Wärmetauscher 17 zugeführten zweiten Kühlmedium in Wärmeaustausch gebracht. Nach dem zwischen den beiden Kühlmedien in dem Wärmetauscher 17 erfolgten Wärmeaustausch wird das erste Kühlmedium mit einer Temperatur von beispielsweise minus 140°C über die Leitung 3 wieder in den ersten Wärmetauscher 1 und das zweite Kühlmedium mit einer Temperatur von beispielsweise minus 160°C über eine Leitung 16 in den Wärmetauscher 11 eingespeist.

Wie in **Fig. 2** dargestellt, kann das aus dem Wärmetauscher 1 abgeführte vorgereinigte Gas auch in einem in der Leitung 5 angeordneten Tieftemperatur-Adsorber 20 durch Adsorption von seinen besonders leichtsiedenden Stoffen , wie beispielsweise Lösemitteln, gereinigt werden.
Das aus dem ersten Wärmetauscher 1 mit einer Temperatur von beispielsweise minus 130°C dem Tieftemperatur-Adsorber 20 zugeführte vorgereinigte Gas erwärmt sich leicht im Tieftemperatur-Adsorber 20 auf eine Temperatur von z.B. minus 125°C und wird anschließend über die Leitung 10 dem Wärmetauscher 11 zugeführt und nach erfolgtem Wärmeaustausch aus dem Wärmetauscher 11 abgezogen. Der Wärmeaustausch in dem Wärmetauscher 11 findet analog Fig.1 statt.

Es ist auch möglich , den Tieftemperatur-Adsorber 20 zusätzlich gekühlt einzusetzen. In diesem Fall kann das aus dem Tieftemperatur-Adsorber 20 abgeführte Reingas eine niedrigere Temperatur aufweisen, als bei seiner Zuführung in den Tieftemperatur-Adsorber 20.

### Bezugszeichenaufstellung

- 1: Wärmetauscher
- 2: Leitung
- 3: Leitung
- 4: Leitung
- 5: Leitung
- 6: Wärmetauscher
- 7: Vorratsbehälter
- 8: Leitung
- 9: Leitung
- 10: Leitung
- 11: Wärmetauscher
- 12: Leitung
- 13: Gebläse oder Pumpe
- 14: Leitung
- 15: Leitung
- 16: Leitung
- 17: Wärmetauscher
- 18: Leitung
- 19: Leitung
- 20: Tieftemperatur-Adsorber
- 21: Leitung

## Patentansprüche

1. Verfahren zur Reinigung von Gasen und/oder zur Rückgewinnung von dampfförmigen Stoffen aus Gasströmen, bei dem das Rohgas durch Kondensieren und/oder Ausfrieren der Schadstoffe mit Hilfe eines ersten Kühlmediums in mindestens einem ersten Wärmetauscher (1) gereinigt und anschließend mindestens einem weiteren, mit dem ersten Kühlmedium beaufschlagten Wärmetauscher (11) zugeführt und nach Wärmeaustausch mit dem ersten Kühlmedium aus dem Wärmetauscher (11) abgeführt wird, bei dem das in dem Wärmetauscher (11) erste Kühlmedium mindestens einem weiteren, mit einem zweiten Kühlmedium beaufschlagten Wärmetauscher (17) zugeführt und nach Wärmeaustausch mit dem zweiten Kühlmedium zumindest dem ersten Wärmetauscher (1) wieder zugeführt wird,
**dadurch gekennzeichnet, dass** das aus dem Wärmetauscher (1) abgeführte vorgereinigte Gas vor seiner Zuführung in den Wärmetauscher (11) weiter abgekühlt und zur Kühlung des ersten Kühlmediums im Wärmetauscher (11) eingesetzt wird.

2. Verfahren nach Anspruch 1, **dadurch gekennzeichnet, dass**
das aus dem Wärmetauscher (1) abgeführte Gas in mindestens einen Wärmetauscher (6) gekühlt und/oder durch mindestens einen Tieftemperatur-Adsorber (20) geleitet wird.

3. Verfahren nach Anspruch 1 oder 2, **dadurch gekennzeichnet, dass**
das vorgereinigte Gas in dem Wärmetauscher (6) mit als zweites Kühlmedium eingesetztes Flüssiggas gekühlt wird.

4. Verfahren nach Anspruch 3, **dadurch gekennzeichnet, dass** als Flüssiggas flüssiger Stickstoff eingesetzt wird.

5. Verfahren nach einem der Ansprüche 1 bis 4, **dadurch gekennzeichnet, dass** das Reingas mit Hilfe des Flüssiggases in dem Wärmetauscher (6) auf eine Temperatur von bis zu minus 196°C gekühlt wird.

6. Verfahren nach einem der Ansprüche 1 bis 5, **dadurch gekennzeichnet, dass** das als Kühlmedium für das Reingas eingesetzte Flüssiggas dem Wärmetauscher (6) direkt aus einem Vorratsbehälter (7) zugeführt wird.

7. Verfahren nach Anspruch 1 oder 2, dass das Reingas in dem Tieftemperatur-Adsorber (20) gereinigt wird.

8. Vorrichtung zur Reinigung von Gasen mit mindestens einem ersten Wärmetauscher (1) mit mindestens einer Leitung (2) für die Zuführung des Rohgases und mit mindestens einer Leitung (5) für die Abführung des kalten Reingases, dem mindestens eine Leitung (3) für die Zuführung und mindestens eine Leitung (4) für die Abführung eines erstes Kühlmediums zugeordnet sind,
mit mindestens einem Wärmetauscher (11) mit mindestens einer Leitung (10) zur Zuführung des kalten Reingases und mindestens einer Leitung (12) für die Abführung des Reingases, dem mindestens eine Leitung (14) zur Zuführung des aus dem Wärmetauscher (1) mittels eines Gebläses oder einer Pumpe (13) zugeführten ersten Kühlmediums und mindestens eine Leitung (15) für die Abführung des ersten Kühlmediums aus dem Wärmetauscher (11) zugeordnet sind,
mit mindestens einem Wärmetauscher (17) mit mindestens
einer Leitung (15) für die Zuführung des ersten Kühlmediums aus dem Wärmetauscher (11) sowie mit mindestens einer Leitung (3) für die Zuführung des ersten Kühlmediums aus dem Wärmetauscher (17) in den ersten Wärmetauscher (1), **dadurch gekennzeichnet, dass**
in der den Wärmetauscher (1) mit dem Wärmetauscher (11) verbindenden Leitung (5) mindestens ein Wärmetauscher (6) und/oder mindestens ein Tieftemperatur-Adsorber (20) angeordnet ist.

9. Vorrichtung nach Anspruch 8, **dadurch gekennzeichnet, dass**
der Wärmetauscher (6) über mindestens eine Leitung (8) mit einem das zweite Kühlmedium enthaltenden Vorratsbehälter (7) verbunden ist.

10. Vorrichtung nach Anspruch 9, **dadurch gekennzeichnet, dass** der Flüssiggas als zweites Kühlmedium enthaltende Vorratsbehälter (7) über die Leitung (8) durch mindestens eine Leitung (18) mit dem Wärmetauscher (17) verbunden ist.

11. Vorrichtung nach einem der Ansprüche 1 bis 10, **dadurch gekennzeichnet, dass** die Wärmetauscher (6, 11, 17) in einem einzigen Apparat integriert sind und der Wärmetausch durch verschiedene Strömungswege an den gemeinsamen Wärmeaustauschflächen realisiert wird.

## Claims

1. Process for purifying gases and/or for recovering substances in vapour form from gas streams, in which the untreated gas is purified by condensing and/or freezing out the pollutants with the aid of a first cooling medium in at least one first heat exchanger (1) and is then fed to at least one further heat exchanger (11), which is acted on by the first cooling medium, and, after heat exchange with the first cooling medium, is discharged from the heat exchanger (11), in which the first cooling medium in the heat exchanger (11) is fed to at least one further heat exchanger (17), which is acted on by a second cooling medium, and, after heat exchange with the second cooling medium, is fed back to at least the first heat exchanger (1), **characterized in that** the pre-purified gas which is removed from the heat exchanger (1) is cooled further before being fed into the heat exchanger (11) and is used to cool the first cooling medium in the heat exchanger (11).

2. Process according to Claim 1, **characterized in that** the gas which is discharged from the heat exchanger (1) is cooled in at least one heat exchanger (6) and/or is passed through at least one cryogenic adsorber (20).

3. Process according to Claim 1 or 2, **characterized in that** the pre-purified gas is cooled in the heat exchanger (6) by liquefied gas used as second cooling medium.

4. Process according to Claim 3, **characterized in that** the liquefied gas used is liquid nitrogen.

5. Process according to one of Claims 1 to 4, **characterized in that** the pure gas is cooled to a temperature of as low as minus 196°C in the heat exchanger (6) with the aid of the liquefied gas.

6. Process according to one of Claims 1 to 5, **characterized in that** the liquefied gas used as cooling medium for the pure gas is fed to the heat exchanger (6) directly from a storage tank (7).

7. Process according to Claim 1 or 2, **characterized in that** the pure gas is purified in the cryogenic adsorber (20).

8. Apparatus for purifying gases, having at least one first heat exchanger (1) with at least one line (2) for supplying the untreated gas and with at least one line (5) for discharging the cold pure gas, which is assigned at least one line (3) for supplying a first cooling medium and at least one line (4) for discharging a first cooling medium,
having at least one heat exchanger (11) with at least one line (10) for supplying the cold pure gas and at least one line (12) for discharging the pure gas, which is assigned at least one line (14) for supplying the first cooling medium, which is supplied from the heat exchanger (1) by means of a fan or a pump (13), and at least one line (15) for discharging the first cooling medium from the heat exchanger (11),
having at least one heat exchanger (17) with at least one line (15) for supplying the first cooling medium from the heat exchanger (11) and with at least one line (3) for supplying the first cooling medium from the heat exchanger (17) into the first heat exchanger (1), **characterized in that** at least one heat exchanger (6) and/or at least one cryogenic adsorber (20) is arranged in the line (5) connecting the heat exchanger (1) to the heat exchanger (11).

9. Apparatus according to Claim 8, **characterized in that** the heat exchanger (6) is connected via at least one line (8) to a storage tank (7) containing the second cooling medium.

10. Apparatus according to Claim 9, **characterized in that** the storage tank (7) containing liquefied gas as second cooling medium is connected via the line (8), through at least one line (18), to the heat exchanger (17).

11. Apparatus according to one of Claims 1 to 10, **characterized in that** the heat exchangers (6, 11, 17) are integrated in a single appliance and the heat exchange is realized by different flow paths at the common heat exchange surfaces.

## Revendications

1. Procédé d'épuration de gaz et/ou de récupération de substances vaporisées dans des écoulements de gaz,
dans lequel le gaz brut est épuré par condensation et/ou congélation des substances nocives à l'aide d'un premier fluide réfrigérant et d'au moins un premier échangeur de chaleur (1), est ensuite apporté à au moins un autre échangeur de chaleur (11) alimenté en le premier fluide réfrigérant et est extrait de l'échangeur de chaleur (11) après échange de chaleur avec le premier fluide réfrigérant,
dans lequel le premier fluide réfrigérant présent dans le premier échangeur de chaleur (11) est apporté à au moins un autre échangeur de chaleur (17) alimenté en un deuxième fluide réfrigérant et est renvoyé au moins dans le premier échangeur de chaleur (1) après échange de chaleur avec le deuxième fluide réfrigérant,
**caractérisé en ce que** le gaz préépuré extrait de l'échangeur de chaleur (1) est encore refroidi avant d'être apporté dans l'échangeur de chaleur (11) et est utilisé pour refroidir le premier fluide réfrigérant présent dans l'échangeur de chaleur (11).

2. Procédé selon la revendication 1, **caractérisé en ce que** le gaz extrait de l'échangeur de chaleur (1) est refroidi dans au moins un échangeur de chaleur (6) et/ou est passé dans au moins un adsorbeur (20) à basse température.

3. Procédé selon les revendications 1 ou 2, **caractérisé en ce que** le gaz préépuré est refroidi dans l'échangeur de chaleur (6) par du gaz liquéfié utilisé comme deuxième fluide réfrigérant.

4. Procédé selon la revendication 3, **caractérisé en ce que** comme gaz liquéfié, on utilise de l'azote liquide.

5. Procédé selon les revendications 1 à 4, **caractérisé en ce qu'**à l'aide du gaz liquéfié, le gaz épuré est refroidi dans l'échangeur de chaleur (6) jusqu'à une température qui peut descendre jusque moins 196°C.

6. Procédé selon l'une des revendications 1 à 5, **caractérisé en ce que** le gaz liquéfié utilisé comme fluide réfrigérant pour le gaz épuré est apporté dans l'échangeur de chaleur (6) en provenance directe d'un réservoir (7).

7. Procédé selon les revendications 1 ou 2, **caractérisé en ce que** le gaz épuré est épuré dans l'adsorbeur (20) à basse température.

8. Dispositif d'épuration de gaz, qui présente :
au moins un premier échangeur de chaleur (1) qui présente au moins un conduit (2) qui apporte le gaz brut et au moins un conduit (5) qui évacue le gaz épuré froid, au moins un conduit (3) d'amenée et au moins un conduit (4) d'évacuation d'un premier fluide réfrigérant étant associés au premier échangeur de chaleur,
au moins un échangeur de chaleur (11) qui présente au moins un conduit (10) d'amenée du gaz épuré froid et au moins un conduit (12) d'évacuation du gaz épuré,
au moins un conduit (14) d'amenée du premier fluide réfrigérant en provenance de l'échangeur de chaleur (1) au moyen d'un ventilateur ou d'une pompe (13) et au moins un conduit (15) d'évacuation du premier fluide réfrigérant hors de l'échangeur de chaleur (11) étant associés à cet échangeur de chaleur,
au moins un échangeur de chaleur (17) qui présente au moins un conduit (15) d'amenée du premier fluide de refroidissement provenant de l'échangeur de chaleur (11) ainsi qu'au moins un conduit (3) qui amène dans le premier échangeur de chaleur (1) le premier fluide réfrigérant provenant de l'échangeur de chaleur (17),
**caractérisé en ce qu'**au moins un échangeur de chaleur (6) et/ou au moins un adsorbeur (20) à basse température sont disposés dans le conduit (5) qui relie l'échangeur de chaleur (1) à l'échangeur de chaleur (11).

9. Dispositif selon la revendication 8, **caractérisé en ce que** l'échangeur de chaleur (6) est relié par au moins un conduit (8) à un réservoir (7) qui contient le deuxième fluide réfrigérant.

10. Dispositif selon la revendication 9, **caractérisé en ce que** le réservoir (7) qui contient le gaz liquéfié comme deuxième fluide réfrigérant est relié à l'échangeur de chaleur (17) par l'intermédiaire du conduit (8) et d'au moins un conduit (18).

11. Dispositif selon l'une des revendications 1 à 10, **caractérisé en ce que** les échangeurs de chaleur (6, 11, 17) sont intégrés dans un même appareil et **en ce que** l'échange de chaleur est réalisé par différents parcours d'écoulement sur les surfaces communes d'échange de chaleur.
